# EUROPEAN PATENT SPECIFICATION

(11) **EP 2 484 196 B1**
(45) Date of publication and mention of the grant of the patent: **28.08.2013**
(21) Application number: 12153366.5
(22) Date of filing: 11.02.2009
(51) Int. Cl.: A01D 78/12

(54) **Raking device**
Rechenvorrichtung
Dispositif de râtelage

(30) Priority: 15.02.2008 NL 1035030
(43) Date of publication of application: 08.08.2012
(62) Divisional of application: 09075070.4
(73) Proprietor: Lely Patent N.V., 3147 PA Maassluis (NL)
(72) Inventor: Van den Engel, Alfonsus Jacobus, 3123 CM Schiedam (NL)
(74) Representative: Postma, Robert Erwin

(56) References cited:
- DE-A1- 1 910 280
- DE-A1- 2 403 694
- FR-A- 2 098 567
- NL-A- 6 709 476
- NL-A- 7 005 414

## Description

### BACKGROUND OF THE INVENTION

The invention relates to a raking device for raking mowed plants lying on the ground, such as grass, in particular in the form of a swathe, according to the preamble of claim 1.

Raking devices of this kind, also referred to as swathe rakes, are known in many different designs (see e.g. NL-A-6709476). In general, they comprise a frame which is to be coupled to a tractor and on which one or more so-called rake wheels are arranged. Each rake wheel comprises a rotor with a vertical axis of rotation, to which a number of radial or combined radial/tangential arms are attached. The ends of the arms are provided with a group of rake teeth which can be turned on the arm between a working or raking position which extends as far as the plane close to the ground and a turned-up inoperative position, in which the rake teeth extend virtually horizontally. The path in the operating position is situated in such a position with respect to the direction of travel that the plants are displaced in a lateral direction to form a ridge or swathe. If several rake wheels are arranged on the frame, they may rotate in the same direction in order together to form a central swathe or, by contrast, to form several lateral swathes.

In order to turn the groups of rake teeth between the inoperative position and the operating position, they are connected to a pivot arm which is pivotably attached to the inner end of each arm and which forms a single rotatable unit with the group of rake teeth. In order to turn the pivot arm, the latter is provided with a roller which travels along a stationary cam track. The stationary cam track comprises an inoperative section and an operating section which, like the orbit path of the arms, are situated in planes at right angles to the axis of rotation of the rotor. However, both sections are in different planes and are connected to one another by two transition sections. In the one transition section, the roller is displaced in such a manner that the pivot arm turns the rake teeth into the operating position and in the other transition section, the roller is displaced in such a manner that a backward rotation of the rake teeth takes place.

When the rake teeth have been brought into the operating position, they will grip mowed plants spread on the ground and carry them along. The number of plants which accumulate in front of the teeth during one turn increases in this case, as a result of which the resistance which the rake teeth experience will increase. As a result, the rake teeth will tend to bend backwards.

If the rake teeth are vertical at the start of the operating section or are attached to the arm in such a manner that the bottom end of the teeth is situated below or behind the arm, the distance of the teeth ends to the ground will increase due to the bending, resulting in a gap and to plants remaining behind on the ground. In order to rake all the plants into a swathe, the operating speed will have to be lowered or an additional operating turn has to be carried out.

If the bottom portion of the rake teeth, in a manner known per se, always extends obliquely forwards and their bottom end is situated in front of the arm, said bending will lead to the ends of the teeth coming closer to the ground and being able to dig into the latter, as a result of which the resistance experienced during raking becomes unacceptably large.

### SUMMARY OF THE INVENTION

It is an object of the invention to provide a raking device of the type mentioned in the preamble by means of which the efficiency when passing through the operating section can be maintained as much as possible.

It is an object of the invention to provide a raking device of the type mentioned in the preamble by means of which the number of plants which are spilled when the end portion of the operating section is passed through is limited.

In one aspect not according to the invention, there is provided a raking device for mowed plants lying on the ground, comprising a stator and a rotor with a substantially vertical rotor axis, in which the rotor is provided with a number of arms which extend outwards therefrom with a radial directional component and which are provided at their outer end with rake teeth and are provided at their inner end with rotation means for rotating the rake teeth about the centre axis of the respective arm during a rotation of the rotor between an inoperative position which is to be assumed in an inoperative section of the rotation and in which the rake teeth are situated above the ground in order not to be in raking engagement with the plants, and an operating position which is to be assumed in an operating section of the rotation in which the rake teeth are in raking engagement with the plants on the ground, with the rotation means being designed to rotate the rake teeth forwards while passing through at least a portion of the operating section.

By the addition of a forward rotation compared to the customary constant orientation of the rake teeth with respect to the axis of rotation of the rotor, the abovementioned increased bending is compensated for, so that a good action of the rake teeth during a rotation can be maintained.

It should be noted that raking devices are known in which the cam track can be adjusted vertically prior to raking, so that the orientation of the teeth, in particular the advance angle, can be adjusted beforehand, but in this case the orientation of the teeth in the entire operating section remains constant.

The inoperative section may be of conventional design, that is to say that the teeth do not change their rotation position with respect to the arm axis.

The rotation means may be designed to rotate the rake teeth forwards while passing through a portion of the operating section which comprises the end portion and/or start portion of the operating section.

The rotation means may be designed to turn the rake teeth forwards while passing through a portion of the operating section which is at a distance from the end and/or the start of the operating section.

The rotation means may be designed to rotate the rake teeth forwards while passing through a portion of the operating section which comprises more than half of the operating section.

The rotation means may be designed to rotate the rake teeth forwards while passing through a portion of the operating section which is largely situated in the second half of the operating section.

In one embodiment, the rotation means are designed to continuously rotate the rake teeth while passing through said part of the operating section. The rotation may be permanent, that is to say with an angle which increases linearly. In another embodiment, the rotation is variable, for example according to a function having a flowing curve.

In the raking device according to the invention, the rotation means comprise a pivot arm on the respective arm, which is provided with a running part, in particular a travelling roller, in which the pivot arm and the rake teeth together form an assembly which can rotate about the axis of the respective arm, in which rotation means furthermore comprise a cam track on the stator for controlled guiding of the running parts on the pivot arms in order to achieve the rotation. Such a construction is in principle similar to the known raking devices mentioned above.

According to the invention the cam track comprises an inoperative section which, via a first transition section, follows an operating section of the cam track in the direction of rotation of the rotor, in which the first transition section is at an angle opening in the direction of rotation of the rotor to a plane at right angles to the rotor axis, in which the operating section of the cam track comprises a first portion, in which the first portion is at at least one first angle opening in the direction of rotation of the rotor to a plane at right angles to the rotor axis, the sign of which is opposite to that of the first transition section. This makes it simple to apply the invention from the point of view of construction, if desired also on existing raking devices by replacing the cam track thereof by a cam track according to the invention.

The inoperative section may, in the usual manner, extend in a plane which is at right angles to the rotor axis.

The abovementioned portion of the operating section of the rotation of the rotor is then formed by said first portion of the operating section of the cam track, both portions are functionally one and the same.

In this case, the first portion of the operating section of the cam track may thus comprise the end and/or the start of the operating section of the cam track, or may adjoin the first transition section indirectly in the direction of rotation of the rotor, for example upstream of an end section situated in a plane at right angles to the rotor axis.

The operating section may, via a second transition section, follow the inoperative section in the direction of rotation of the rotor.

The first portion of the operating section of the cam track may extend along the entire operating section. Alternatively, the first portion of the operating section of the cam track is preceded by or followed by a second portion of the operating section of the cam track which runs parallel to said plane at right angles to the rotor axis.

In one embodiment, in which the running part trails behind the respective arm in the direction of rotation, the first angle may have a negative sign.

The cam track may be formed in a manner known per se such that the axes of the travelling rollers are at a constant angle to the rotor axis, viewed in projection on a plane which contains the travelling roller axis and runs parallel to the rotor axis, with the travelling roller axis preferably intersecting the rotor axis and preferably being at an angle of approximately 90 degrees thereto.

The invention provides a raking device for cut plants, comprising a stator and a rotor with a substantially vertical rotor axis, in which the rotor is provided with a number of arms which extend outwards therefrom with a radial directional component and which are provided at their outer end with rake teeth and are provided at their inner end with a pivot arm with a running part, in particular a travelling roller, in which the pivot arm and the rake teeth together form an assembly which can rotate about the axis of the respective arm, in which the stator is provided with a cam track for controlled guiding of the running parts on the pivot arms so that, during a rotation of the arms, the rake teeth are in an inoperative position in an inoperative section of the rotation and are in an operating position in an operating section of the rotation, in which the inoperative section, via a first transition section, follows the operating section in the direction of rotation of the rotor, in which the first transition section is at an angle opening in the direction of rotation of the rotor to a plane at right angles to the rotor axis, in which the operating section of the cam track comprises a portion which is at a first angle opening in the direction of rotation of the rotor to a plane at right angles to the rotor axis, the sign of which is opposite to that of the first transition section.

The operating section may, via a second transition section in the direction of rotation of the rotor, follow the inoperative section, with the sign of the first angle being identical to that of the second transition section.

In a further aspect not according to the invention, there is provided a raking device for cut plants, comprising a stator and a rotor with a substantially vertical rotor axis, in which the rotor is provided with a number of arms which extend outwards therefrom with a radial directional component and which are provided at their outer end with rake teeth and are provided at their inner end with a pivot arm with a running part, in which the pivot arm and the rake teeth together form an assembly which can rotate about the axis of the respective arm, in which the stator is provided with a cam track for controlled guiding of the running parts on the pivot arms so that, during a rotation of the arms, the rake teeth are in an inoperative position in an inoperative section of the rotation and are in an operating position in an operating section of the rotation, in which at least a first portion of the operating section of the cam track is inclined with respect to the orbit path of the arms.

In one embodiment, the first portion descends with respect to the orbit path of the arms.

In an alternative embodiment, the first portion ascends with respect to the orbit path of the arms.

The aspects and measures described in this description and claims of the application and/or illustrated in the drawings of this application can, where possible, also be applied separately from one another. Said separate aspects may be the subject of divisional patent applications to this effect. This applies in particular to the measures and aspects which have been described as such in the subclaims.

### SHORT DESCRIPTION OF THE FIGURES

The invention will be explained with reference to an exemplary embodiment illustrated in the attached drawings, in which:
Figure 1 shows a diagrammatic side view of a swathe raking machine provided with a raking device according to the invention;
Figure 2 shows a cross section through a central part of a raking device according to the invention;
Figures 3 and 3A show an outline of a cam track for a raking device according to the invention and a detail thereof, respectively; and
Figure 4 shows a diagrammatic illustration of an effect of a cam track of Figure 3 in a raking device according to the invention.

### DETAILED DESCRIPTION OF THE FIGURES

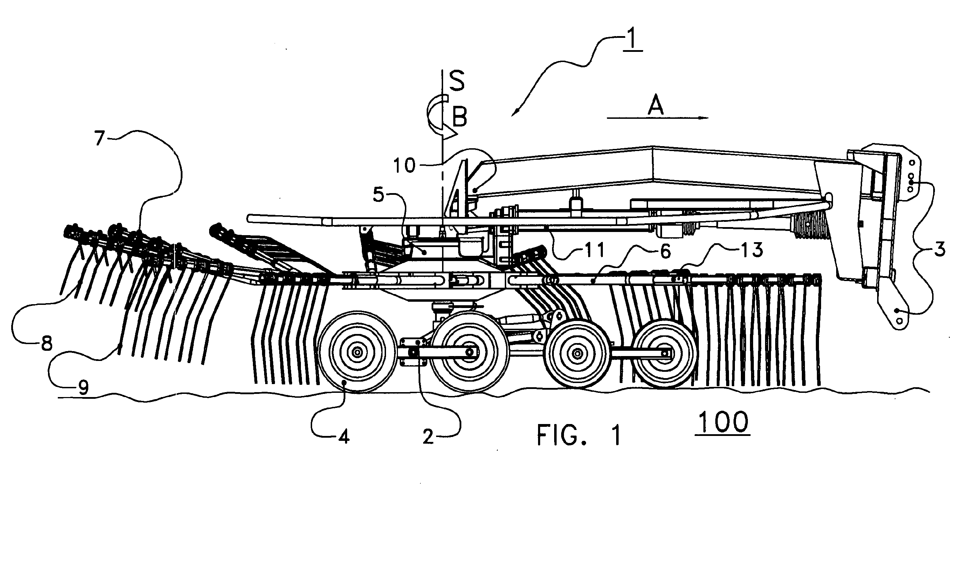

The raking device 1 illustrated in Figure 1 comprises a frame 2 provided with wheels 4 which is provided with a coupling arm 10 with coupling parts 3 for coupling to a tractor (not shown in any further detail) which can pull the raking device 1 (direction A) across ground 100 and can drive the horizontal drive shaft 11 thereof using a power take-off.

The drive shaft 11 is intended for driving, via a right-angled transmission (not shown in any further detail), a rotor 5 which is rotatable about rotor axis S in direction B and on which a number of raking arms 6 are carried. At their radial outer ends 7, the raking arms 6 are provided with raking pins 8, which can rake up plants which have been cut and are spread on the ground 100 with their bottom ends 9.

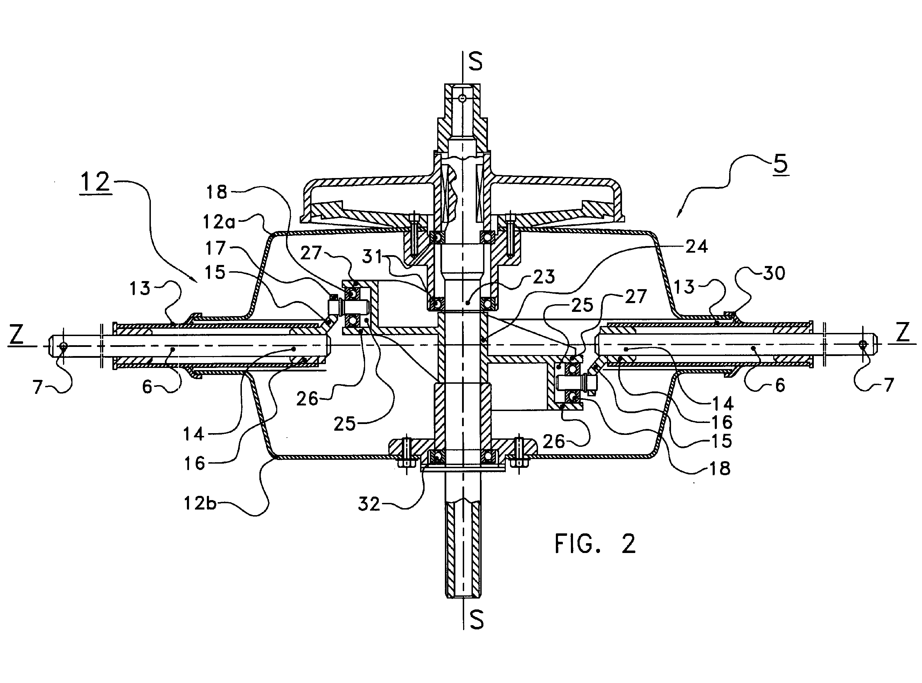

Figure 2 shows the rotor arrangement 5 in more detail. The rotor housing 12 comprises a top cover 12a and a bottom cover 12b, which hold a supporting collar 30 between them, which supports the raking arms 6 so that they can co-rotate with the rotor housing 12 while maintaining their radial and/or tangential orientation. The raking arms 6 comprise a fixed sleeve 13, which is fixedly secured in the supporting collar 30. In the sleeves 13, arm rods 14 are mounted which can rotate about their axis and which, at their radial outer ends, are provided with raking pins 8 and, at their radial inner ends, are provided with operating arms 15 which are non-rotatably attached thereto by clamping rings 16 and which are trailing, viewed in the direction of rotation, with respect to the respective arm rod 14. At their free ends 17, the operating arms 15 are provided with rollers 18, the axes of which are in this case radially directed, at right angles to the rotor axis. The raking arms 6 are situated in and co-rotate with the rotor 5 in the direction of rotation in a plane Z, which is at right angles to the rotor axis S.

The rotor 5 surrounds a stator shaft 23, which is non-rotatably attached to the frame 2 and supports bearings 31 and 32 for the rotor 5. Between the bearings 31, 32, the stator shaft 23 furthermore non-rotatably supports a cam track body 24, on which a cam track 25, delimited by bottom guide 26 and top guide 27, is provided for guiding the rollers 18.

As is illustrated in Figure 2, the course of the cam track 25 varies in the peripheral direction thereof, as a result of which the vertical position of the rollers 18 varies during rotation. As a result thereof, a torsional force is exerted on the arm rods 14 via the operating arms 15, leading to a pivoting of the rake teeth 8 (directions C). The cam track 25 is here designed such that the rake teeth 8 are pivoted upwards to the rear in an inoperative section of the rotation so as to remain out of engagement with the plants and are pivoted forwards in an operating section of the rotation, into a substantially upright position, in order to move the plants situated on the ground 100 in the desired direction and form a swathe.

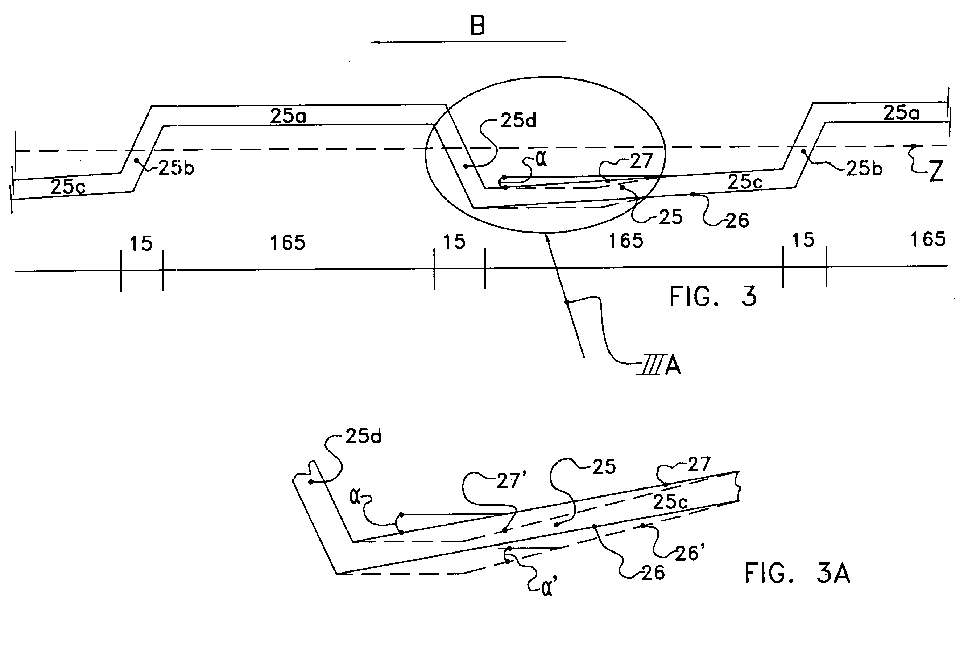

An outline of the cam track 25 is shown in Figure 3, in which the inoperative section 25a extends horizontally, that is to say is situated in a plane at right angles to the rotor axis S and parallel to plane Z, and the operating section 25c extends at a constant, negative angle α of, for example, 3 degrees with respect to said plane and plane Z. Via ascending transition section 25d, the operating section 25c passes into inoperative section 25a, which at its end passes into the operating section 25c via descending transition section 25b. The inoperative section 25a and the operating section 25c can each extend over 165 degrees, and the transition sections 25b and 25d in that case each over 15 degrees.

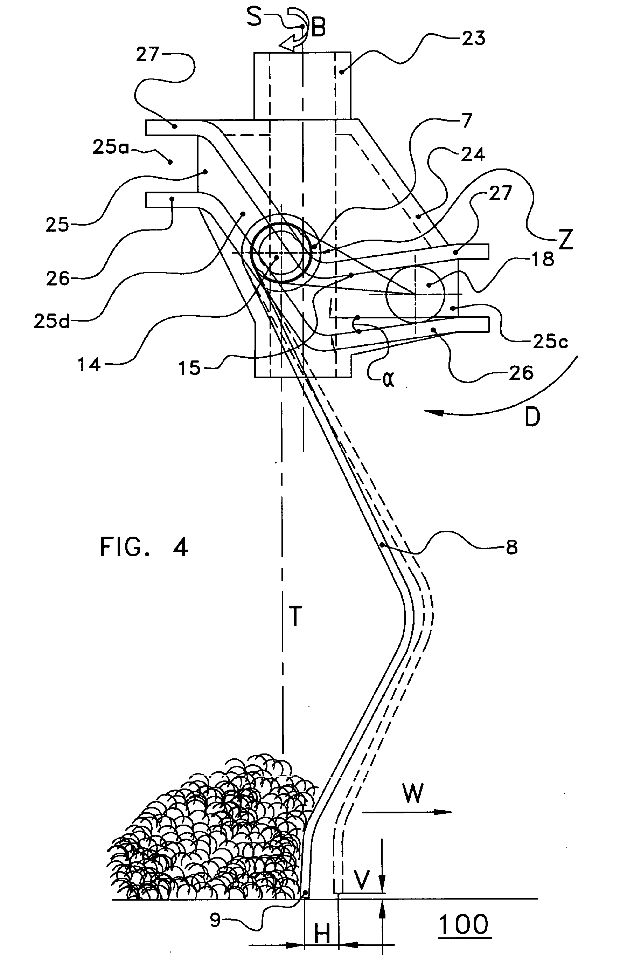

Figure 4 shows the passage through an end portion of the operating section 25c, in which the roller 18 is still in a downward track, while the arm rod 14 maintains its vertical position along the rotor axis S, in plane Z. As a result of the descending track 25c, the operating arm 15 will be pivoted increasingly further in the direction D, thus rotating the arm rod 14 and thereby pivoting the rake teeth 8 forwards, while passing through the operating section. Compared to a track extending parallel to the plane Z, the ends 9 of the rake teeth 8 (viewed in an unloaded state, i.e. without any plants) will then have been moved forwards, indicated in the illustration by distance H. This compensates for the backward movement of these ends which would result from the bending of the teeth 8 due to the increasing resistance W of the plants on the ground. Otherwise, the gap V between the ground 100 and the tooth ends 9 which are situated behind the axial plane T through the end of the arm rod 14 would become too large, resulting in spillage.

It should be noted that the acute angle of track 25c can also vary, for example when said track is bent. The track 25c can thus comprise a (short) part which runs parallel to plane Z, in particular at the end of the operating section, in order to make the transition to the transition section 25d less sharp, see dashed lines 26' and 27' in the detail in Figure 3A, in which the angle α' of the sloping track with plane Z is slightly larger.

The above description is given in order to illustrate the operation of preferred embodiments of the invention and not in order to limit the scope of the invention. On the basis of the above explanation, many variations which fall within the scope of the present invention will be obvious to a person skilled in the art.

## Claims

1. Raking device (1) for cut plants, comprising a stator (23) and a rotor (5) with a substantially vertical rotor axis, in which the rotor (5) is provided with a number of arms which extend outwards therefrom with a radial directional component and which are provided at their outer end (7) with rake teeth (8) and are provided at their inner end with a pivot arm (15) with a running part (18), in particular a travelling roller, in which the pivot arm (15) and the rake teeth (8) together form an assembly which can rotate about the axis of the respective arm, in which the stator (23) is provided with a cam track (25) for controlled guiding of the running parts on the pivot arms so that, during a rotation of the arms, the rake teeth (8) are in an inoperative position in an inoperative section of the rotation and are in an operating position in an operating section (25c) of the rotation, in which the inoperative section (25a), via a first transition section (25d), follows the operating section (25c) in the direction of rotation of the rotor, in which the first transition section (25d) is at an angle opening in the direction of rotation of the rotor to a plane at right angles to the rotor axis, **characterised in that** the operating section (25c) of the cam track comprises a first portion which is at a first angle opening in the direction of rotation of the rotor to a plane at right angles to the rotor axis, the sign of which is opposite to that of the first transition section (25d).

2. Raking device (1) according to Claim 1, in which the first portion of the operating section (25c) of the cam track comprises the end and/or the start of the operating section (25c) of the cam track.

3. Raking device (1) according to Claim 2, in which the first portion of the operating section (25c) of the cam track adjoins the first transition section (25d) indirectly in the direction of rotation of the rotor, preferably via a cam track-portion which extends parallel to said plane.

4. Raking device (1) according to Claim 1, 2 or 3, in which the operating section (25c), via a second transition section (25b), follows the inoperative section (25a) in the direction of rotation of the rotor.

5. Raking device (1) according to one of Claims 1-4, in which the running part trails behind the respective arm in the direction of rotation and the first angle has a negative sign.

6. Raking device (1) according to one of Claims 1-5, in which the inoperative section (25a) of the cam track is situated in a plane which is at right angles to the rotor axis.

## Patentansprüche

1. Rechenvorrichtung (1) für gemähte Pflanzen, umfassend einen Stator (23) und einen Rotor (5) mit einer im Wesentlichen vertikalen Rotorachse, wobei der Rotor (5) mit einer Anzahl von Armen versehen ist, welche sich von diesem nach außen mit einer radialen Richtungskomponente erstrecken und welche an ihrem äußeren Ende (7) mit Rechenzähnen (8) und an ihrem inneren Ende mit einem Schwenkarm (15) mit einem Laufteil (18), im Besonderen mit einer verfahrbaren Rolle ausgerüstet sind, wobei der Schwenkarm (15) und die Rechenzähne (8) gemeinsam eine Baueinheit bilden, welche sich um die Achse des jeweiligen Arms drehen kann, wobei der Stator (23) mit einer Nockenbahn (25) zum gesteuerten Führen der Laufteile auf den Schwenkarmen versehen ist, so dass während einer Drehung der Arme die Rechenzähne (8) sich in einer Nichteingriffsposition in einem Nichteingriffsbereich der Drehung befinden und sich in einer Eingriffsposition in einem Eingriffsbereich (25c) der Drehung befinden, wobei der Nichteingriffsbereich (25a) über einen ersten Übergangsbereich (25d) dem Eingriffsbereich (25c) in Drehrichtung des Rotors folgt, wobei der erste Übergangsbereich (25d) in Drehrichtung des Rotors über einen Winkel in einer Ebene im rechten Winkel zur Rotorachse angeordnet ist,
**dadurch gekennzeichnet, dass** der Eingriffsbereich (25c) der Nockenbahn einen ersten Abschnitt umfasst, welcher in Drehrichtung des Rotors einen ersten Winkel aufweist, der in einer Ebene im rechten Winkel zur Rotorachse angeordnet ist, wobei deren Vorzeichen entgegengesetzt zu der Ebene des ersten Übergangsbereichs (25d) ist.

2. Rechenvorrichtung (1) nach Anspruch 1,
in welcher der erste Abschnitt des Eingriffsbereichs (25c) der Nockenbahn das Ende und/oder den Start des Eingriffsabschnitts (25c) der Nockenbahn umfasst.

3. Rechenvorrichtung (1) nach Anspruch 2,
in welcher der erste Abschnitt des Eingriffsbereichs (25c) der Nockenbahn in Drehrichtung des Rotors indirekt an den ersten Übergangsbereich (25d) grenzt, vorzugsweise über einen Nockenbahnabschnitt, welcher sich parallel zu dieser Ebene erstreckt.

4. Rechenvorrichtung (1) nach Anspruch 1, 2 oder 3,
in welcher der Eingriffsbereich (25c) über einen zweiten Übergangsbereich (25b) dem Nichteingriffsbereich (25a) in Drehrichtung des Rotors folgt.

5. Rechenvorrichtung (1) nach einem der Ansprüche 1 bis 4,
in welcher der Laufteil hinter dem jeweiligen Arm in Drehrichtung nachfolgt und der erste Winkel ein negatives Vorzeichen aufweist.

6. Rechenvorrichtung (1) nach einem der Ansprüche 1 bis 4,
in welcher der Nichteingriffsbereich (25a) der Nockenbahn in einer Ebene angeordnet ist, welche im rechten Winkel zur Rotorachse steht.

## Revendications

1. Dispositif de râtelage (1) pour plantes coupées, comprenant un stator (23) et un rotor (5) avec un axe de rotor sensiblement vertical, dans lequel le rotor (5) est muni d'une pluralité de bras qui s'étendent vers l'extérieur à partir de celui-ci avec une composante directionnelle radiale et qui sont munis à leur extrémité extérieure (7) de dents de râteau (8) et sont munis à leur extrémité intérieure d'un bras de pivotement (15) avec une partie roulante (18), en particulier un rouleau mobile, dans lequel le bras de pivotement (15) et les dents de râteau (8) forment conjointement un ensemble qui peut tourner autour de l'axe du bras respectif, dans lequel le stator (23) est pourvu d'un chemin de came (25) pour un guidage contrôlé des parties roulantes sur les bras de pivotement de telle sorte que, durant une rotation des bras, les dents de râteau (8) sont dans une position inactive dans une section inactive de la rotation et sont dans une position de fonctionnement dans une section de fonctionnement (25c) de la rotation, dans lequel la section inactive (25a), via une première section de transition (25d), suit la section de fonctionnement (25c) dans la direction de rotation du rotor, dans lequel la première section de transition (25d) est à un angle d'ouverture dans la direction de rotation du rotor par rapport à un plan à angles droits par rapport à l'axe de rotor, **caractérisé en ce que** la section de fonctionnement (25c) du chemin de came comprend une première portion qui est à un premier angle d'ouverture dans la direction de rotation du rotor par rapport à un plan à angles droits par rapport à l'axe de rotor, dont le signe est opposé à celui de la première section de transition (25d).

2. Dispositif de râtelage (1) selon la revendication 1, dans lequel la première portion de la section de fonctionnement (25c) du chemin de came comprend la fin et/ou le début de la section de fonctionnement (25c) du chemin de came.

3. Dispositif de râtelage (1) selon la revendication 2, dans lequel la première portion de la section de fonctionnement (25c) du chemin de came jouxte la première section de transition (25d) indirectement dans la direction de rotation du rotor, de préférence via une portion de chemin de came qui s'étend parallèlement audit plan.

4. Dispositif de râtelage (1) selon la revendication 1, 2 ou 3, dans lequel la section de fonctionnement (25c), via une deuxième section de transition (25b), suit la section inactive (25a) dans la direction de rotation du rotor.

5. Dispositif de râtelage (1) selon une des revendications 1 à 4, dans lequel la partie roulante traîne derrière le bras respectif dans la direction de rotation et le premier angle a un signe négatif.

6. Dispositif de râtelage (1) selon une des revendications 1 à 5, dans lequel la section inactive (25a) du chemin de came est située dans un plan qui est à angles droits par rapport à l'axe de rotor.
